Europäisches Patentamt

European Patent Office

Office européen des brevets

(11) Veröffentlichungsnummer: **0 133 929**
**B1**

(12) **EUROPÄISCHE PATENTSCHRIFT**

(45) Veröffentlichungstag der Patentschrift:
08.02.89

(21) Anmeldenummer: 84108109.4

(22) Anmeldetag: 11.07.84

(51) Int. Cl.⁴: **B 23 K 11/36**

(54) Schweisszange zum Widerstandsschweissen von Bauteilen.

(30) Priorität: 29.07.83 DE 3327510

(43) Veröffentlichungstag der Anmeldung:
13.03.85 Patentblatt 85/11

(45) Bekanntmachung des Hinweises auf die Patenterteilung:
08.02.89 Patentblatt 89/6

(84) Benannte Vertragsstaaten:
DE FR GB IT SE

(56) Entgegenhaltungen:
DE-A- 2 834 835
DE-A- 2 943 245
DE-B- 1 303 169
DE-C- 944 878

PATENT ABSTRACTS OF JAPAN, Band 7, Nr. 179
(M-234)[1324], 9. August 1983; & JP-A-58 81 579
(MATSUSHITA DENKI SANGYO K.K.) 16-05-1983

(73) Patentinhaber: BAYERISCHE MOTOREN WERKE
Aktiengesellschaft, Postfach 40 02 40 Petuelring 130 -
AJ-36, D-8000 München 40 (DE)

(72) Erfinder: Weiser, Klaus, Dortstrasse 24,
D-8081 Kottgeisering (DE)
Erfinder: Pötz, Klaus, Ludwig-Anzengruber-Strasse 5,
D-8250 Dorfen (DE)
Erfinder: Wilhelm, Wilfried, Marbachstrasse 19a,
D-8000 München 70 (DE)
Erfinder: Pannenbecker, Günter,
Andreas-Herz-Strasse 8, D-8011 Kolonie Baldham (DE)
Erfinder: Widowitz, Gerhard, Siriasstrasse 8,
D-8044 Unterschleissheim (DE)

(74) Vertreter: Dexheimer, Rolf, c/o Bayerische Motoren
Werke Aktiengesellschaft Postfach 40 02 40,
D-8000 München 40 (DE)

**Beschreibung**

Die Erfindung bezieht sich auf eine Schweisszange zum elektrischen Widerstandsschweissen der im Oberbegriff des Patentanspruchs 1 genannten und aus der DE-C-944 878 (Fig. 3) hervorgehenden Art.

Die in der erwähnten Druckschrift offenbarte Schweisszange hat ein C-förmiges Aufnahmeteil, an dessen beiden gegenüberliegenden Endabschnitten die Elektrodenhalter angeordnet sind, welche jeweils eine Schweisselektrode tragen. Dabei ist ein Elektrodenhalter starr angebracht, während der andere Elektrodenhalter schwenkbar am Aufnahmeteil gelagert ist. Bei ausgeschwenktem Elektrodenhalter kann hierdurch ein Werkstück mit verhältnismässig grosser Breite in dem zwischen dem starren und dem schwenkbaren Elektrodenhalter vorhandenen Zwischenraum angeordnet werden, während zum Erzeugen eines Schweisspunkts der ausgeschwenkte Elektrodenhalter eingeschwenkt wird, wobei die Schweisselektroden miteinander fluchten.

Ferner ist aus der DE-A-2 943 245 eine Schweisszange bekannt, deren Schweisselektrodenhalter durch druckmittelbeaufschlagte Stellmotore um einen gemeinsamen Schwenkpunkt verschwenkbar sind. Die Schweisselektrodenhalter sind hierbei jedoch lediglich scherenartig zueinander verlagerbar.

Falls mit den erläuterten Schweisszangen, insbesondere bei Einsatz durch einen Schweissroboter, an einem Bauteil mit beispielsweise U-förmigem Querschnittsprofil – oder an einem Bauteil das etwa gleichartig kompliziert räumlich gekrümmt gestaltet ist – im Bereich der senkrecht oder schräg zueinander verlaufenden Wandungsabschnitten jeweils Schweisspunkte vorzusehen sind, so muss die Schweisszange zur Positionierung an den im Winkel zueinander liegenden Schweisspunktstellen mehrmals gedreht oder geschwenkt werden. Dies ist speziell beim Schweissen an einer Personenkraftwagenkarosserie derart zeitraubend, dass die vorgesehenen Taktzeiten oftmals überschritten werden.

Aufgabe der Erfindung ist es daher, eine Schweisszange der im Oberbegriff des Patentanspruchs 1 genannten Gattung derart auszubilden, dass mit ihr an Wandungsabschnitten von kompliziert räumlich, speziell etwa U-, L- oder Z-förmig gekrümmten Bauteilen möglichst rationell Schweisspunkte vorgesehen werden können.

Zur Lösung der Aufgabe sind die im kennzeichnenden Teil des Patentanspruchs 1 dargelegten Merkmale vorgesehen.

Da die an einer erfindungsgemässen Schweisszange vorgesehenen Schweisselektroden sowohl über stirnseitige als auch über seitliche Arbeitsflächen zusammenwirken können, kann die Schweisszange im wesentlichen in der gleichen Raumlage – üblicherweise waagrecht oder senkrecht – verbleiben, wobei mit den Schweisselektroden für das Zusammenwirken ihrer stirnseitigen Arbeitsflächen eine Schiebebewegung und für das Zusammenwirken ihrer seitlichen Arbeitsflächen eine Scherenbewegung ausgeführt wird. Nachdem mit der erfindungsgemässen Schweisszange speziell im Automobilbau Fertigungszeiten eingespart werden können, wird vorteilhafterweise auch der sie tragende Schweissroboter oder das Bedienungspersonal entlastet. Ferner beansprucht die Schweisszange bei Einbau in einen Schweissroboter auch verhältnismässig wenig Arbeitsraum, denn es brauchen weniger Taktstationen angefahren werden. Durch die in der Schweisszange durchführbaren Schiebe- und Scherenbewegungen der Schweisselektroden muss auch der Schweissroboterarm vorteilhafterweise nur kurze Verlagerungswege ausführen.

Nach den Merkmalen der Patentansprüche 5 und 6 bzw. 7 und 8 werden einzelne Schenkhebel der Schweisszange und damit die Schiebe- und Scherenelektrode über Scheren- und Schiebezylinder bzw. Scherenausgleich- und Schiebeausgleichzylinder verlagert, so dass in der Schweisszange Schiebe- und Scherenbewegungen in einem einzigen Gelenksystem vereint sind, wobei je nach Bedarf die eine oder andere Bewegungsart getrennt, also unabhängig voneinander, anwendbar ist.

Weitere Ausgestaltungen der Erfindung sind in anderen Unteransprüche gekennzeichnet.

Ein Ausführungsbeispiel der Erfindung ist in der Zeichnung dargestellt und wird im folgenen erläutert. Es zeigt:

Fig. 1 eine Gesamtansicht der Schweisszange mit sich in Schiebestellung befindenden Schweisselektroden,

Fig. 2 die Schweisszange mit sich in Scherenstellung befindenden Schweisselektroden,

Fig. 3 eine Draufsicht von Fig. 1,

Fig. 4 eine Seitenansicht der Schweisszange in Pfeilrichtung A von Fig. 1,

Fig. 5 eine Einzelheit der Schweisszange gesehen in Pfeilrichtung B von Fig. 1,

Fig. 6 eine schematische Darstellung eines Dreistellungszylinders, der als erster und dritter Stellmotor vorgesehen ist.

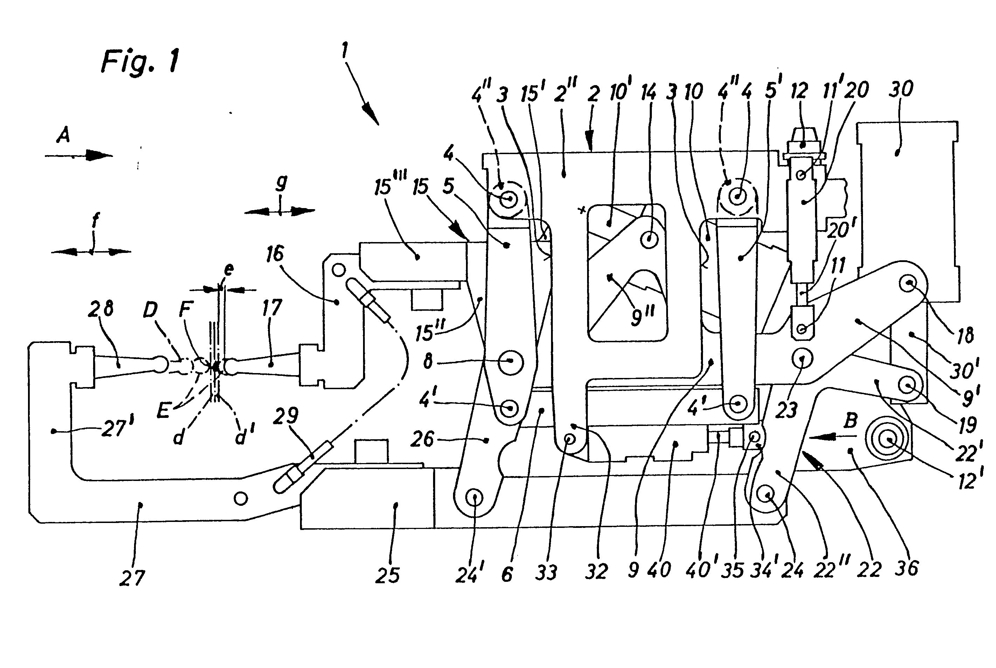

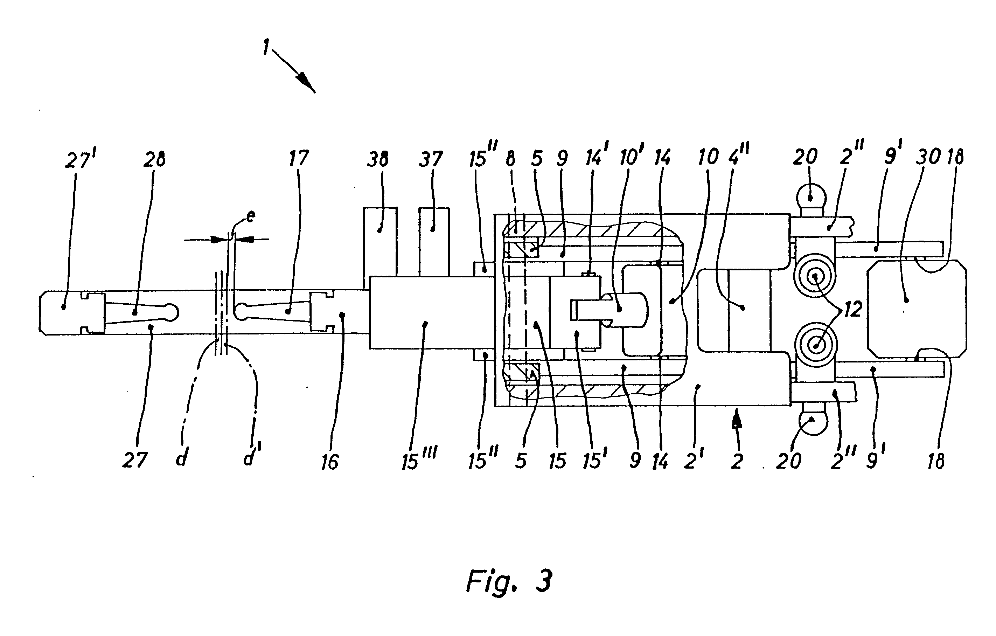

Die in den Fig. 1 bis 4 dargestellte Schweisszange 1 dient zum Widerstandsschweissen von Blechteilen od. dgl. und weist ein U-förmig gestaltetes Aufnahmeteil 2 auf, das an seinem Steg 2' oder an wenigstens einem seiner Schenkel 2'' über nicht dargestellte Befestigungsmittel an einem ebenfalls nicht veranschaulichten programmgesteuerten Schweissroboter befestigt ist. Die beiden Schenkel 2'' des Aufnahmeteils 2 haben an ihrem vorderen und hinteren Endbereichen jeweils eine Ausnehmung 3, in deren Bereich an den Schenkeln 2'' über eine Lagerwelle 4 jeweils zwei vordere Längsarme 5 und zwei hintere Längsarme 5' angelenkt sind, welche sich vom Steg 2' abwärts erstrecken. Die Längsarme 5 und 5' sind jeweils an ihren freien Endabschnitten über jeweils einen Lagerbolzen 4' mit einem sich etwa parallel zum Steg 2' des Aufnahmeteils 2 erstreckenden Verbindungslenker 6 verbunden. Die vier Längsarme 5, 5' und zwei Verbindungslenker 6 sind etwa gleichlang und können durch ihre Aneinanderlenkung parallelogrammartig in Längsrichtung des Aufnahmeteils 2 verlagert werden. Die Längsarme 5 und 5' sind jeweils über eine von der Lagerwelle 4 durchsetzte Hülse 4' starr verbunden.

Die vorderen Längsarme 5 sind ferner durch eine oberhalb den Lagerbolzen 4' liegende Lagerwelle 8 miteinander verbunden. auf dieser sind zwei sich längserstreckende und umrissgleiche Formschwenkhebel 9 jeweils mit ihrem vorderen Endabschnitt und nahe an der Innenseite der vorderen Längsarme 5 schwenkbar gelagert. Am rückwärtigen Endbereich der Formschwenkhebel 9 ist eine zum Steg 2' des Aufnahmeteils 2 hin weisende Abwicklung 9' vorgesehen. In deren Scheitelbereich ist an den beiden Formschwenkhebeln 9 die Kolbenstange 20' zweier Stellmotore 20 über Bolzen 11 angelenkt, wobei die beiden Stellmotore 20 ihrerseits jeweils an einem Schenkel 2'' des Aufnahmeteils 2' über Bolzen 11' schwenkbar gelagert sind. Die beiden Stellmotore 20 sind druckluftbeaufschlagte, doppeltwirkende Stellzylinder und dienen im Anlenksystem als Scherenausgleichzylinder; ferner werden sie in Bezug zu den übrigen, im folgenden genannten Stellmotore 10, 30, 40 als «zweite Stellmotore» bezeichnet. Schliesslich ist den beiden Stellmotoren 20 jeweils ein Druckregelventil 12 zugeordnet, die jeweils an einem Schenkel 2'' des Aufnahmeteils 2 befestigt sind.

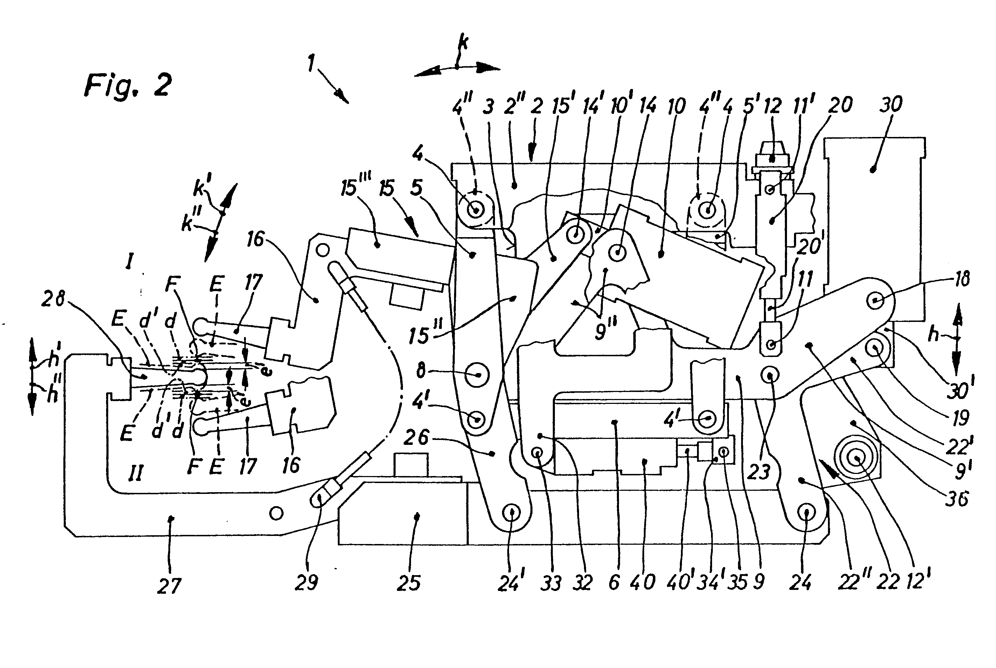

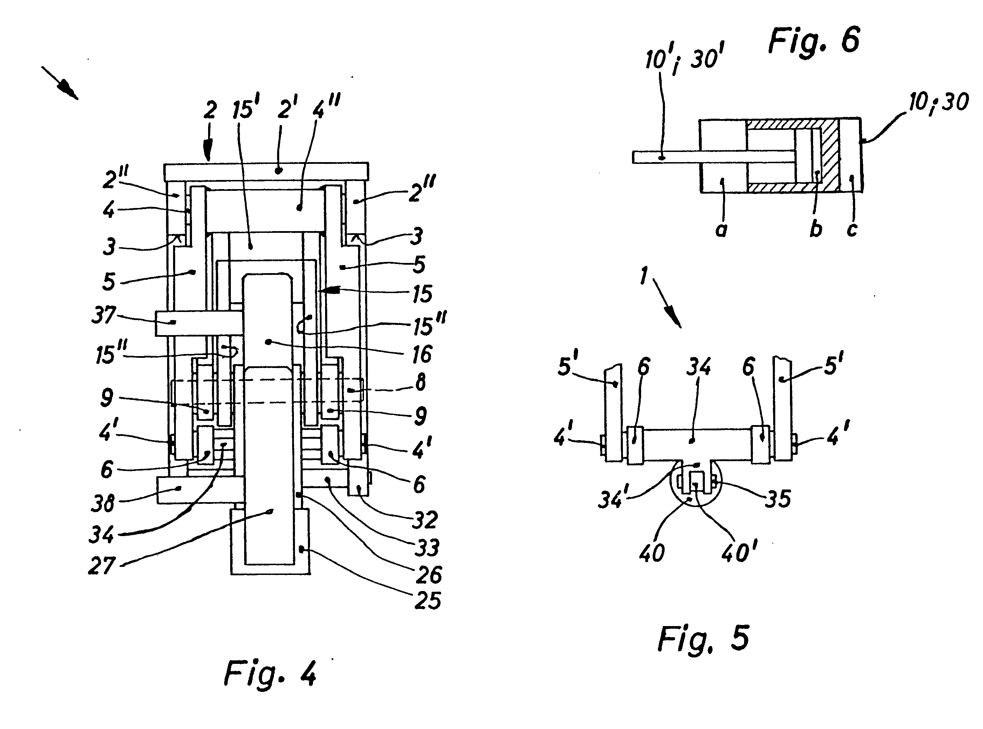

Die Formschwenkhebel 9 haben an ihrem vorderen Bereich eine zum Steg 2' des Aufnahmeteils 2 hinragende firstförmige Erhebung 9'', in deren Firstbereich über einen Lagerbolzen 14 ein erster Stellmotor 10 schwenkbar gelagert ist, welcher als Scherenzylinder dient. Die Kolbenstange 10' des Stellmotors 10 ist über einen Lagerbolzen 14' an einem nach oben weisenden Arm 15' eines etwa T-förmigen Tragteils 15 angelenkt. Dieses hat zwei untenliegende, sich im Abstand voneinander befindende Arme 15'', über die es auf der Lagerwelle 8 zwischen den beiden Formschwenkhebeln 9 drehbar gelagert ist (Fig. 2 bis 4). An einem nach aussen gerichteten, relativ weit über das Aufnahmeteil 2 vorstehenden Arm 15''' des Tragteils 15 ist unter Einbettung in eine Isolationsschicht ein winkelförmiger Scherenelektrodenhalter 16 festgeschraubt. In diesen ist eine aus einer speziellen Kupferlegierung bestehende Scherenelektrode 17 auswechselbar eingesetzt. Der erste Stellmotor 10 ist als ein druckluftbeaufschlagter Dreistellungszylinder ausgebildet (Fig. 6).

Wie die Fig. 1 bis 3 zeigen, ist zwischen den rückwärtigen Abwinkelungen 9' der Formschwenkhebel 9 über zwei Lagerzapfen 18 das Gehäuse eines dritten Stellmotors 30 schwenkbar gelagert, der als Schiebezylinder dient und als ein druckluftbeaufschlagter Dreistellungszylinder ausgebildet ist (Fig. 6). Die Kolbenstange 30' des Stellmotors 30 ist über einen Bolzen 19 am nach hintenragenden Arm 22' eines Winkelhebels 22 angelenkt, der seinerseits im Bereich seiner Abwinkelung auf einem sich quer zwischen den Formschwenkhebel 9 erstreckenden Lagerbolzen 23 – welcher benachbart des Bolzens 11 liegt –

schwenkbar gelagert ist. An dem nach unten ragenden Arm 22'' des Winkelhebels 22 ist über einen Gelenkbolzen 24 der rückwärtige Endabschnitt eines etwa parallel zu Steg 2' des Aufnahmeteils 2 verlaufenden Schubarms 25 angelenkt, an dessen vorderem Bereich über einen Gelenkbolzen 24' ein Schwenkhebel 26 angelenkt ist. Dieser ist mit seinem oberen Endabschnitt zwischen den beiden Armen 15'' des Tragteils 15 auf der Lagerwelle 8 schwenkbar gelagert (Fig. 1, 2 und 4). Am vorderen, freien Endabschnitt des Schubarms 25 ist unter Einbettung in eine Isolationsschicht ein winkelförmiger Schiebeelektrodenhalter 27 festgeschraubt. An dessen vorderem, zur Scherenelektrode 17 hinragenden Abschnitt 27' ist eine aus einer speziellen Kupferlegierung bestehende Schiebeelektrode 28 auswechselbar eingesetzt. Sowohl diese als auch die Scherenelektrode 17 sind an ihrem freien Endabschnitt kugelförmig ausgebildet. Die im Scherenelektrodenhalter 16 und im Schiebeelektrodenhalter 27 vorgesehenen Kühlmittelkanäle sind über eine Kühlmittelleitung 29 miteinander verbunden.

Wie in den Fig. 1, 2 und 4 ersichtlich, weisen die beiden Schenkel 2'' des Aufnahmeteils 2 an ihrem vorderen Bereich jeweils einen nach unten abstehenden Fortsatz 32 auf. Zwischen den beiden Fortsätzen 32 erstreckt sich eine Gelenkwelle 33, an der ein vierter Stellmotor 40 schwenkbar gelagert ist, der als Schiebeausgleichszylinder dient. In Fig. 4 und 5 ist zu ersehen, dass die Verbindungslenker 6 im hinteren Bereich über ein Zwischenteil 34 starr miteinander verbunden sind, von dem nach unten ein Lagerauge 34' absteht. An diesem ist über einen Bolzen 35 die Kolbenstange 40' des Stellmotors 40 angelenkt. Dieser ist als ein doppeltwirkender druckluftbeaufschlagter Stellzylinder ausgebildet; ferner ist dem Stellmotor 40 ein Druckregelventil 12' zugeordnet, das über eine Halteplatte 36 an einem der Formschwenkhebel 9 befestigt ist.

Damit die vier Stellmotore 10, 20, 30, 40 durch die Programmsteuerung eines Schweissroboters über eine nicht dargestellte pneumatische Steuerung gesteuert werden können, sind ihnen jeweils elektrische Ventile zugeordnet. Ferner hat der Scherenelektrodenhalter 16 und der Schiebeelektrodenhalter 27 einen Elektrokabelanschluss 37 bzw. 38. Durch die Druckventile 12, 12' ist der Druck in der Druckleitung der Stellmotore 20 und 40 bei unterschiedlicher Belastung der Kolbenstange 20' bzw. 40' – beispielsweise infolge verschiedener Raumlagen der Schweisszange 1 – einstellbar.

Die Wirkungsweise der erfindungsgemässen Schweisszange 1 – bezogen auf die in den Fig. 1 und 2 dargestellte, waagrechte Raumlage und bei Steuerung durch die Programmsteuerung eines Schweissroboters – ist folgende:

a) Schiebebewegung (Fig. 1)

In Fig. 1 sind zwei sich in senkrechter Ebene zwischen der Scherenelektrode 17 und der Schiebeelektrode 28 befindende Bleche d, d' dargestellt die durch deren stirnseitiges Gegeneinanderwirken miteinander punktverschweisst werden. Die Scherenelektrode 17 und die Schiebeelektrode 28 befinden sich in der mit durchgezogenen Linien dargestellten, fluchtenden Lage in einer Ausgangsstellung. In dieser haben die Kolbenstangen 10', 20', 30', 40' der Stellmotore 10, 20, 30, 40 bei entsprechender Druckluftbeaufschlagung der jeweiligen Kolben folgende Stellungen (für die Stellmotore 10 und 30 siehe auch Fig. 6):

Stellmotor 10 – Kolbenstange 10' in Mittelstellung (Druck in den Kammern a und c)

Stellmotore 20 – Kolbenstangen 20' bleiben eingefahren

Stellmotor 30 – Kolbenstange 30' ausgefahren (Druck in den Kammern b und c)

Stellmotor 40 – Kolbenstange 40' ausgefahren (Hublänge ca. 10 mm)

Bei Verschiebungen der Kolbenstange 30' des Stellmotors 30 wird über den Winkelhebel 22 der Schubarm 25 und damit die Schiebeelektrode 28 in den Richtungen des Doppelpfeils f verlagert. Ferner wird bei Verschiebungen der Kolbenstange 40' des Stellmotors 40 über die Verbindungslenker 6 und das Tragteil 15 die Scherenelektrode 17 in den Richtungen des Doppelpfeils g verlagert. Für die pneumatisch gesperrten Stellmotore 10 und 20 erfolgen die Erläuterungen unter b) (Scherenbewegung).

Da die zu verschweissenden Bleche d, d' infolge von Fertigungstoleranzen an einer starr aufgenommenen Blechkonstruktion unterschiedlich weit von der Scherenelektrode 17 und Schiebeelektrode 28 entfernt liegen können – beispielsweise wenn sich die Bleche d, d' an einer vorrichtungsfixierten Kraftfahrzeugskarosserie befinden – ist die Programmsteuerung des Schweissroboters, in den die erfindungsgemässe Schweisszange 1 eingesetzt ist, so programmiert, dass die freie, kalottenförmige Stirnseite der Scherenelektrode 17 stets um ein relativ kleines Mass e – das beispielsweise etwa 3 mm beträgt – vom zugewandten Blech d' entfernt liegt. Hierdurch ist gewährleistet, dass bei dem im folgenden geschilderten Arbeitshub von Schiebeelektrode 28 und Scherenelektrode 17 letztere zuerst gegen das Blech d' gepresst wird und dadurch gewissermassen einen Gegenhalter für die in Vorhub (Stellung D) entfernter liegendere und dadurch etwas später gegen das Blech d wirkende Schiebeelektrode 28 bildet; somit können die beiden Bleche d, d' beim Schweissvorgang nicht durch die Schiebeelektrode 28 und Scherenelektrode 17 verbogen oder eingedrückt werden. Dabei ist jedoch durch das vorgesehene Mass e an einer Schweissseite ein Toleranzausgleich vorhanden, während an der gegenüberliegenden Schweissseite durch die entfernter liegendere Schiebeelektrode 28 ohnehin ein grosser Abstand vorhanden ist.

Im Vorhub fährt die Kolbenstange 30' des Stellmotors 30 in Mittelstellung (wobei Druck in den Kammern a und c herrscht) und verlagert dadurch die Schiebeelektrode 28 in die mit strichpunktierten Linien dargestellte Stellung D, während die Stellung der übrigen Kolbenstangen 10', 20' unverändert bleibt, also die Scherenelektrode 17 gegenüber der Ausgangsstellung nicht verlagert wird.

Bei dem nun erfolgenden Arbeitshub fahren sowohl die Kolbenstange 30' des Stellmotors 30 (bei Druck in der Kammer a) als auch die Kolbenstange 40' des Stellmotors 40 ein, wodurch in der mit gestrichelten Linien dargestellten Stellung E zuerst die Scherenelektrode 17 und sodann Schiebeelektrode 28 gegen das Blech d' bzw. d gepresst und bei bestehender Schweissstromspannung ein Schweisspunkt F erzeugt wird. Die Schiebeelektrode 28 wird bei ihren Längsverlagerungen im Vorhub D und Arbeitshub E durch die dabei erfolgenden Verlagerungen des Schubarms 25 um die Lagerwelle 8 und den Lagerbolzen 23 geringfügig längsgerichtet bogenförmig verlagert; dies kann jedoch durch entsprechende Positionierung der Scherenelektrode 17 jeweils weitgehend ausgeglichen werden.

Zur Rückverlagerung von Schiebeelektrode 28 und Scherenelektrode 17 (Vorhub D) fährt die Kolbenstange 30' des Stellmotors 30 (bei Druck in den Kammern a und c) in die Mittelstellung, während die Kolbenstange 40' des Stellmotors 40 etwas ausgefahren wird; in die Ausgangsstellung fahren dagegen die Kolbenstange 30' des Stellmotors 30 (bei Druck in den Kammern b und c) und die Kolbenstange 40' des Stellmotors 40 aus.

b) Scherenbewegung (Fig. 2)

Die Bleche d, d' liegen zum Verschweissen in der Scherenbewegung waagrecht zwischen der Scherenelektrode 17 und der Schiebeelektrode 28, also parallel zu deren Längserstreckung und an den seitlichen Arbeitsflächen von Scherenelektrode 17 und Schiebeelektrode 28; somit verlaufen sie rechtwinkelig zu den in Fig. 1 dargestellten Blechen d, d' und können damit beispielsweise mit diesen die Schenkel eines U-Profils bilden, wobei die Bleche d, d' von Fig. 1 der Steg ist. Die Schiebeelektrode 28 wird in Ruhelage so positioniert, dass sie um ein relativ kleines Mass e' vom zugekehrten Blech d' entfernt liegt, somit bei den im folgenden erläuterten Schweissvorgängen jeweils zuerst gegen dieses gepresst wird und damit einen Gegenhalter für die Scherenelektrode 17 bildet.

Bei Verschiebungen der Kolbenstangen 20' der beiden Stellmotore 20 werden die beiden Formschwenkhebel 9 um die Lagerwelle 8 in den Richtungen des Doppelpfeils h geschwenkt; dabei wird die Schiebeelektrode 28 bei Ausschiebung der Kolbenstangen 20' nach oben verlagert (Pfeilrichtung h'), während sie bei deren Einschiebung nach unten gelangt (Pfeilrichtung h''). Währenddessen bleiben die Kolbenstangen 30' und 40' der Stellmotore 30 und 40 in eingefahrenem Zustand pneumatisch gesperrt. Bei Längsverschiebungen der Kolbenstange 10' des Stellmotors 10 wird das Tragteil 15 um die Lagerwelle 8 in den Richtungen des Doppelpfeils k geschwenkt, wodurch die Scherenelektrode 17 bei Einschiebung der Kolbenstange 10' nach oben gelangt (Pfeilrichtung k'), während sie bei deren Ausschiebung in Pfeilrichtung k'' abwärts verlagert wird.

Bei der in Fig. 2 mit durchgezogenen Linien dargestellten Ausgangsstellung von Schiebeelektrode 28 und Scherenelektrode 17 haben die Kolbenstangen 10', 20', 30', 40' der Stellmotore 10, 20, 30, 40 folgende Stellungen:

Stellung I (für Schweissen oben):

Stellmotor 10 – Kolbenstange 10' bleibt eingefahren (Druck in Kammer a)

Stellmotore 20 – Kolbenstangen 20' bleiben eingefahren

Stellmotor 30 – Kolbenstange 30' bleibt eingefahren (Druck in Kammer a)

Stellmotor 40 – Kolbenstange 40' bleibt eingefahren

Stellung II (für Schweissen unten):

Stellmotor 10 – Kolbenstange 10' ausgefahren (Druck in Kammer b und c)

Stellmotore 20 – Kolbenstangen 20' ausgefahren

Stellmotor 30 – Kolbenstange 30' eingefahren (Druck in Kammer a)

Stellmotor 40 – Kolbenstange 40' eingefahren

Wenn die Bleche d, d' oberhalb bzw. ausserhalb der Schiebeelektrode 28 liegen (Schweissen in Stellung I) fährt die Kolbenstange 10' des Stellmotors 10 (bei Druck in der Kammer b) sowie die Kolbenstangen 20' der Stellmotore 20 aus, wodurch zuerst die Schiebeelektrode 28 in Pfeilrichtung h' gegen das Blech d' und sodann die Scherenelektrode 17 in Pfeilrichtung k'' gegen das Blech d gepresst wird (Stellung E mit gestrichelten Linien dargestellt), wobei ein Schweisspunkt F entsteht. Die Kolbenstangen 30' und 40' der Stellmotore 30 und 40 bleiben dabei eingefahren. In die Ausgangsstellung I fährt anschliessend die Kolbenstange 10' des Stellmotors 10 (bei Druck in der Kammer a) und die Kolbenstangen 20' der Stellmotore 20 ein.

Bei unterhalb bzw. auf der Innenseite der Schiebeelektrode 28 liegenden Blechen d, d' (Schweissen in Stellung II) fährt die Kolbenstange 10' des Stellmotors 10 (bei Druck in der Kammer a) sowie die Kolbenstangen 20' der Stellmotore 20 ein, wodurch zuerst die Schiebeelektrode 28 in Pfeilrichtung h'' gegen das Blech d' und daraufhin die Scherenelektrode 17 in Pfeilrichtung k' gegen das Blech d gepresst wird (mit gestrichelten Linien dargestellte Stellung E); dabei werden die Bleche d, d' durch einen Schweisspunkt F verschweisst. Die Kolbenstangen 30' und 40' der Stellmotore 30 und 40 bleiben dabei eingefahren. Zur Rückverlagerung in die Ausgangsstellung II fährt die Kolbenstange 10' des Stellmotors 10 (bei Druck in der Kammer b und c) sowie die Kolbenstangen 20' der Stellmotore 20 aus.

Die Schweisszange 1 kann selbstverständlich nicht nur waagrecht, sondern auch in jeder anderen Raumlage, beispielsweise senkrecht, betätigt werden. Zur Erzeugung eines Schweisspunkts F an beispielsweise im Winkel zueinander liegenden Blechabschnitten d, d' braucht über den Schweissroboter nur die jeweilige Schweisspunktlage angefahren zu werden, während die Raumlage der Schweisszange 1 dabei unverändert bleibt.

Der Schiebeelektrodenhalter 27 und der Scherenelektrodenhalter 16 kann auch jeweils mit einer rechtwinkelig von seiner Längserstreckung wegragenden Schweisselektrode versehen sein; diese wirken zur Erzeugung eines Schweisspunkts scherenartig bzw. geradlinig oder längsgerichtet bogenförmig zusammen.

**Patentansprüche**

1. Schweisszange (1) zum elektrischen Widerstandsschweissen, insbesondere zum Einbau in einen Roboter, bei der eine erste (28) und eine zweite (17), jeweils an einem Elektrodenhalter (27, 16) befestigte Schweisselektrode so gegeneinander verlagerbar sind, dass ihre stirnseitigen Arbeitsflächen zur Erzeugung eines Schweisspunkts (F) zusammenwirken, und die zweite Schweisselektrode (17) zusätzlich in bezug zur Längserstreckung der ersten Schweisselektrode (28) verschwenkbar ist, dadurch gekennzeichnet, dass die erste Schweisselektrode (28) in verschwenkter Lage der zweiten Schweisselektrode (17) um ein solches Mass verschiebbar ist, dass bei deren Verschwenken zur ersten Schweisselektrode (28) hin beide Schweisselektroden (17, 28) über seitliche Arbeitsflächen zur Erzeugung eines Schweisspunkts (F) zusammenwirken können.

2. Schweisszange nach Anspruch 1, dadurch gekennzeichnet, dass ein U-förmig gestaltetes Aufnahmeteil (2) vorgesehen ist, wobei ein Scherenelektrodenhalter (16) und ein Schiebeelektrodenhalter (27) gemeinsam über einen Endbereich des Aufnahmeteils (2) hinausragen und beide mit mehreren, teilweise an diesem angelenkten und teilweise miteinander gelenkig verbundenen Schwenkhebeln in gelenkiger Verbindung stehen, und dass ferner die erste Schweisselektrode von einer Schiebeelektrode (28) und die zweite Schweisselektrode von einer Scherenelektrode (17) gebildet sind, wobei der die Schiebeelektrode (28) tragende Schiebeelektrodenhalter (27) und der die Scherenelektrode (17) aufnehmende Scherenelektrodenhalter (16) durch vier an einzelnen Schwenkhebeln angreifende, druckmittelbeaufschlagte Stellmotore (10, 20, 30, 40) verlagerbar sind.

3. Schweisszange nach Anspruch 1 oder 2, die in einen programmgesteuerten Schweissroboter eingebaut ist, dadurch gekennzeichnet, dass die Stellmotore (10, 20, 30, 40) durch die Programmsteuerung des Schweissroboters bei Zuordnung elektrischer Ventile gesteuert werden und das U-förmige Aufnahmeteil (2) an seinem Steg (2') oder an wenigstens einem seiner Schenkel (2'') am Schweissroboter befestigt ist.

4. Schweisszange nach Anspruch 2, dadurch gekennzeichnet, dass an den beiden Schenkeln (2'') des Aufnahmeteils (2) jeweils zwei, sich an dessen vorderem und hinterem Endbereich befindende sowie sich vom Steg (2') des Aufnahmeteils weg erstreckende vordere und hintere Längsarme (5, 5') angelenkt sind, die an ihren freien Endabschnitten über jeweils einen Verbindungslenker (6) verbunden sind, welche parallel zum Steg des Aufnahmeteils verlaufen, wobei die Längsarme und Verbindungslenker jeweils etwa gleichlang und paralleloprogrammartig in Längsrichtung verlagerbar sind.

5. Schweisszange nach Anspruch 4, dadurch gekennzeichnet, dass die vorderen Längsarme (5) durch eine oberhalb der Lagerstelle der Verbindungslenker (6) gelagerte Lagerwelle (8) miteinander verbunden sind, auf der zwei sich längserstreckende u. umrissgleiche, jeweils nahe an der Innenseite eines Längsarms liegende Formschwenkhebel (9) mit ihrem vorderen Endabschnitt schwenkbar gelagert sind, während am rückwärtigen Endbereich der Formschwenkhebel jeweils ein zweiter, seinerseits an einem Schenkel (2'') des Aufnahmeteils (2) befestigter Stellmotor (20) angelenkt ist, die beide als Scherenausgleichszylinder dienen.

6. Schweisszange nach Anspruch 5, dadurch gekennzeichnet, dass die beiden Formschwenkhebel (9) an ihrem vorderen Bereich eine nach oben ragende firstförmige Erhebung (9'') aufweisen, wobei in deren Firstbereich ein erster, als Scherenzylinder dienender Stellmotor (10) schwenkbar gelagert ist, dessen Kolbenstange (10') an dem nach oben weisenden Arm (15') eines etwa T-förmigen Tragteils (15) angreift, das seinerseits mit seinen beiden untenliegenden Armen (15'') auf der Lagerwelle (8) zwischen den beiden Formschwenkhebeln gelagert ist, während an einem nach aussen gerichteten Arm (15''') des Tragteils der Scherenelektrodenhalter (16) befestigt ist.

7. Schweisszange nach Anspruch 6 bzw. Anspruch 4, dadurch gekennzeichnet, dass zwischen den rückwärtigen Abwinkelungen (9') der Formschwenkhebel (9) ein dritter, als Schiebezylinder dienender Stellmotor (30) schwenkbar gelagert ist, dessen Kolbenstange (30') an einem Arm (22') eines Winkelhebels (22) angreift, wobei dieser seinerseits im Bereich seiner Abwinkelung auf einem sich quer zwischen den Formschwenkhebeln erstreckenden Lagerbolzen (23) gelagert ist, und ferner der abwärtsragende Arm (22'') des Winkelhebels am rückwärtigen Endabschnitt eines etwa parallel zum Steg (2') des Aufnahmeteils (2) verlaufenden und unterhalb dessen Schenkeln (2'') liegenden Schubarms (25) angelenkt ist, der an seinem vorderen Bereich über einen Schwenkhebel (26) auf der Lagerwelle (8) schwenkbar gelagert ist, während am vorderen, freien Endabschnitt des Schubarms der winkelförmige, mit seinem vorderen Abschnitt (27') zur Scherenelektrode (17) ragende Schiebeelektrodenhalter (27) befestigt ist.

8. Schweisszange nach Anspruch 6 bzw. Anspruch 4, dadurch gekennzeichnet, dass die beiden Schenkel (2'') des Aufnahmeteils (2) an ihrem vorderen Bereich jeweils einen nach unten wegragenden Fortsatz (32) aufweisen, zwischen denen über eine Gelenkwelle (33) ein vierter, als Schiebeausgleichszylinder dienender Stellmotor (40) schwenkbar gelagert ist, dessen Kolbenstange (40') an einem vom rückwärtigen Endbereich der Verbindungslenker (6) nach unten abstehenden und mit diesen starr verbundenen Lagerauge (34') angreift.

9. Schweisszange nach Anspruch 5 und 8, dadurch gekennzeichnet, dass den beiden zweiten Stellmotoren (20) und dem vierten Stellmotor (40) jeweils ein Druckregelventil (12 bzw. 12') zugeordnet ist.

10. Schweisszange nach Anspruch 2 bis 8, dadurch gekennzeichnet, dass die vier Stellmotore (10, 20, 30, 40) jeweils druckluftbeaufschlagte Stellzylinder sind, wobei der erste und der dritte Stellmotor (10, 30) als Dreistellungszylinder ausgebildet sind, während die zweiten und der vierte Stellmotor (20, 40) doppelwirkende Hubzylinder sind.

## Claims

1. Welding tongs (1) for electric resistance welding, especially for installation in a robot, in which a first welding electrode (28) and a second welding electrode (17), each secured to an electrode holder (27, 16), are displaceable in relation to one another in such a way that their end working faces co-operate for the production of a weld spot (F), and the second welding electrode (17) is additionally pivotable in relation to the longitudinal extent of the first welding electrode (28), characterised in that the first welding electrode (28) is displaceable, with the second welding electrode (17) in the pivoted position, by such a distance that in the pivoting thereof towards the first welding electrode (28) both welding electrodes (17, 28) can co-operate by way of lateral working faces for the production of a weld spot (F).

2. Welding tongs according to Claim 1, characterised in that a reception part (2) of U-shaped configuration is provided, while a scissor-type electrode holder (16) and a sliding electrode holder (27) protrude in common beyond an end zone of the reception part (2) and both are in articulated connection with several pivot levers of which some are articulated to the reception part (2) and some are articulatedly connected with one another, and further that the first welding electrode is formed by a sliding electrode (28) and the second welding electrode is formed by a scissor-type electrode (17), while the sliding electrode holder (27) carrying the sliding electrode (28) and the scissor-type electrode holder (16) receiving the scissor-type electrode (17) are shiftable by four servo-motors (10, 20, 30, 40) acting on individual pivot levers and charged with pressure medium.

3. Welding tongs according to Claim 1 or 2 which are installed in a programme-controlled welding robot, characterised in that the servo-motors (10, 20, 30, 40) are controlled by the programme control system of the welding robot in association with electric valves, and the U-shaped reception part (2) is secured to the welding robot by its crosspiece (2') or by at least one of its legs (2'').

4. Welding tongs according to Claim 2, characterised in that to each of the two legs (2'') of the reception part (2) there are articulated two forward and rear longitudinal arms (5, 5') situated at the forward and rear end zones of the reception part (2) and extending away from the cross-piece (2') of the reception part, which longitudinal arms are connected in each case at their free end sections through a connecting link (6) which extends parallel to the cross-piece of the reception part, the longitudinal arms and connecting links being approximately of equal length and displaceable in a parallelogram manner in the longitudinal direction.

5. Welding tongs according to Claim 4, characterised in that the forward longitudinal arms (5) are connected to one another by a bearing shaft (8) mounted above the bearing position of the connecting links (6), on which bearing shaft two longitudinally-extending, similarly-contoured shaped pivot levers (9), each lying close to the inner side of a longitudinal arm, are pivotably mounted at their forward end sections, while on each rearward end zone of the shaped pivot levers there is articulated a second servo-motor (20) secured in turn to a leg (2'') of the reception part (2), both of which servo-motors serve as scissor-motion compensation cylinders.

6. Welding tongs according to Claim 5, characterised in that the two shaped pivot levers (9) comprise at their forward region an upwardly-extending elevated portion (9'') of ridge form, in the ridge region of which a first servo-motor (10) serving as a scissor-motion cylinder is pivotably mounted, the piston rod (10') of which acts on the upwardly-pointing arm (15') of a somewhat T-shaped carrier part (15) which, in turn, is mounted with its two lower arms (15'') on the bearing shaft (8) between the two shaped levers, while the scissor-type electrode holder (16) is secured on an outwardly-directed arm (15''') of the carrier part.

7. Welding tongs according to Claim 6 and/or Claim 4, characterised in that, between the rear angled-off portions (9') of the shaped pivot levers (9), a third servo-motor (30) serving as a sliding cylinder is pivotably mounted, the piston rod (30') of which acts on an arm (22') of a bell-crank lever (22), while the latter in turn is mounted in the region of its angle on a bearing bolt (23) extending transversely between the shaped pivot levers, and further the downwardly-extending arm (22'') of the bell-crank lever is articulated to the rear end section of a thrust arm (25) extending approximately parallel to the cross-piece (2') of the reception part (2) and lying beneath the legs (2'') of the latter, which thrust arm is mounted pivotably at its forward region by means of a pivot lever (26) on the bearing shaft (8), while the sliding electrode holder (27) of angular form extending with its forward section (27') to the scissor-type electrode (17) is secured to the forward free end section of the thrust arm.

8. Welding tongs according to Claim 6 and/or Claim 4, characterised in that the two legs (2'') of the reception part (2) each comprise at their forward region an extension (32) protruding away downwards, between which extensions a fourth servo-motor (40) serving as a sliding motion compensation cylinder is pivotably mounted by means of an articulation shaft (33), the piston rod (40') of which servo-motor acts upon a bearing eye (34') which protrudes downwards from the rear end region of the connecting links (6) and is rigidly connected with these.

9. Welding tongs according to Claims 5 and 8, characterised in that to each of the two second servo-motors (20) and the fourth servo-motor (40) there is allocated a pressure-regulating valve (12, 12') respectively.

10. Welding tongs according to Claims 2 to 8, characterised in that the four servo-motors (10, 20, 30, 40) are each pneumatically-charged servo-cylinders, the first and the third servo-motors (10, 30) being formed as three-position cylinders while the second and the fourth servo-motors (20, 40) are double-acting reciprocating cylinders.

**Revendications**

1. Pince de soudage (1) pour le soudage électrique par résistance, notamment pour le montage dans un robot, pince de soudage dans laquelle une première électrode de soudage (28) et une seconde électrode de soudage (17), respectivement fixées sur un support d'électrodes (27, 16), sont susceptibles d'être déplacées l'une par rapport, de façon que leurs surfaces de travail frontales coopèrent pour réaliser un point de soudure (F), tandis que la deuxième électrode de soudage (17) est en outre, susceptible de pivoter par rapport à l'étendue longitudinale de la première électrode de soudage (28), pince de soudage caractérisée en ce que la première électrode de soudage (28), lorsque la seconde électrode de soudage (17) a pivoté, est susceptible d'être déplacée dans une mesure telle, que lorsque la seconde électrode de soudage (17) pivote à nouveau vers la première électrode de soudage (28), les deux électrodes de soudage (17, 28) peuvent coopérer par l'intermédiaire de leurs surfaces de travail latérales pour réaliser un point de soudure (F).

2. Pince de soudage selon la revendication 1, caractérisée en ce qu'il est prévu une partie réceptrice (2) en forme de U, un support (16) d'électrode de cisaillement et un support (27) d'électrode de translation faisant tous deux saillie au-delà d'une extrémité de cette partie réceptrice (2), et étant tous deux en liaison, par articulation, avec plusieurs leviers oscillants reliés par articulation partiellement à cette partie réceptrice et partiellement entre eux, la première électrode de soudage étant constituée par une électrode de translation (28), tandis que la deuxième électrode de soudage est constituée par une électrode de cisaillement (17), le support d'électrode (17) portant l'électrode de translation (28) et le support d'électrode (16) recevant l'électrode de cisaillement (17) étant susceptibles d'être déplacés par quatre vérins (10, 20, 30, 40) alimentés par un fluide sous pression et venant en prise sur les différents leviers oscillants.

3. Pince de soudage selon la revendication 1 ou 2, qui est montée dans un robot de soudage commandé par programme, pince de soudage caractérisée en ce que les vérins (10, 20, 30, 40) sont commandés par la programmation du robot de soudage associé à des vannes électriques, et que la pièce réceptrice (2) en forme de U est fixée au robot de soudage par son âme (2') ou bien par au moins une de ses branches (2'').

4. Pince de soudage selon la revendication 2, caractérisée en ce que, aux deux branches (2'') de la partie réceptrice (2) sont respectivement articulés deux bras longitudinaux (5, 5') avant et arrière se trouvant à l'extrémité avant et à l'extrémité arrière de cette partie réceptrice et s'étendant à partir de l'âme (2') de cette partie réceptrice, ces bras étant reliés à leurs extrémités libres, par l'intermédiaire respectivement d'une bielle de liaison (6), ces bielles s'étendant parallèlement à l'âme de la partie réceptrice, les bras longitudinaux et les bielles de liaison ayant respectivement à peu près la même longueur et étant susceptibles de se déplacer en direction longitudinale, à la façon d'un parallélogramme.

5. Pince de soudage selon la revendication 4, caractérisé en ce que les bras longitudinaux avant (5) sont reliés entre eux par un arbre (8) monté au-dessus de l'emplacement des paliers des bielles de liaison (6), et sur lequel sont montés par leurs extrémités avant, de façon à pouvoir osciller, deux leviers de forme oscillants (9) de contours identiques, s'étendant longitudinalement et placés respectivement tout contre la face interne d'un bras longitudinal, tandis qu'à l'extrémité arrière de chacun de ces leviers de forme oscillants, est articulé un second vérin (20) fixé de son côté sur une branche (2'') de la partie réceptrice (2), ces deux vérins jouant le rôle de vérins de compensation du cisaillement.

6. Pince de soudage selon la revendication 5, caractérisée en ce que les deux leviers de forme oscillants (9) comportent sur leurs parties avant, une élévation (9'') en forme de faîte s'étendant vers le haut, un premier vérin (10) jouant le rôle de vérin de cisaillement étant monté de façon à pouvoir osciller sur la zone de faîte de ces leviers oscillants, la tige de piston (10') de ce vérin venant en prise sur le bras (15') dirigé vers le haut, d'une pièce porteuse (15) approximativement en forme de T, qui, de son côté, est montée par ses deux bras placés en-dessous (15') sur l'arbre (8) entre les deux leviers de forme oscillants, tandis que sur un bras (15'''), dirigé vers l'extérieur de la pièce porteuse, est fixé le support (16) de l'électrode de cisaillement.

7. Pince de soudage selon la revendication 6 ou bien selon la revendication 4, caractérisée en ce que, entre les parties coudées arrières (9') des leviers de forme oscillants (9) est monté, de façon à pouvoir pivoter, un troisième vérin (30) jouant le rôle de vérin de translation, et dont la tige de piston (30') vient en prise sur un bras (22') d'un levier coudé (22), celui-ci, de son côté, étant monté au voisinage de son coude sur un tourillon (23) s'étendant entre les leviers de forme oscillants, tandis qu'en outre, le bras (22'') s'étendant vers le bas du levier coudé, est articulé sur l'extrémité arrière d'un bras de poussée (25) à peu près parallèle à l'âme (2') de la partie réceptrice (2) et placé au-dessous des branches (2'') de cette partie réceptrice, ce bras de poussée étant monté à sa partie avant par l'intermédiaire d'un levier oscillant (26) de façon à pouvoir pivoter sur l'arbre (8), tandis qu'à l'extrémité avant libre du bras de poussée, est fixé le support (27), en forme d'équerre, de l'électrode de cisaillement dont la partie antérieure (27') s'étend vers cette électrode de cisaillement (17).

8. Pince de soudage selon la revendication 6 ou bien la revendication 4, caractérisée en ce que les deux branches (2'') de la partie réceptrice (2) comportent sur leurs parties avant, respectivement un prolongement (32) s'écartant vers le bas, prolongements entre lesquels est monté, par l'intermédiaire d'un arbre d'articulation (33), de façon à pouvoir pivoter, un quatrième vérin (40) jouant le rôle de vérin de compensation du cisaillement et dont la tige de piston (40') vient en prise sur une chape de palier (34') faisant saillie vers le bas à partir de l'extrémité arrière de la bielle de liaison (6), avec laquelle elle est reliée de façon rigide.

9. Pince de soudage selon les revendications 5 et 8, caractérisée en ce qu'une soupape de réglage de la pression (12 ou bien 12') est respectivement associée aux deux seconds vérins (20) et au quatrième vérin (40).

10. Pince de soudage selon l'une des revendications 2 à 8, caractérisée en ce que les cinq vérins (10, 20, 30, 40) sont respectivement des vérins alimentés par de l'air comprimé, le premier et le troisième vérins (10, 30) revêtant la forme de vérins à trois positions, tandis que les seconds et le quatrième vérins (20, 40) sont des vérins de levage à double effet.

Fig. 1

EP 0 133 929 B1

Fig. 2

Fig. 3

Fig. 6

Fig. 5

Fig. 4

EP 0 133 929 B1